# EUROPEAN PATENT SPECIFICATION

(11) **EP 2 746 710 B1**
(45) Date of publication and mention of the grant of the patent: **28.08.2019**
(21) Application number: 12825756.5
(22) Date of filing: 17.07.2012
(51) Int. Cl.: F28D 7/08, F28D 7/14, E03C 1/00, F28F 1/42, F28D 1/053, F28D 7/04, F28D 7/12, F28D 15/00, F28F 1/04, F28F 1/36, F28D 21/00

(54) **HEAT EXCHANGER, AND ENERGY RECOVERY DEVICE AND ENERGY RECOVERY SYSTEM COMPRISING HEAT EXCHANGER**
WÄRMETAUSCHER SOWIE ENERGIERÜCKGEWINNUNGSVORRICHTUNG UND ENERGIERÜCKGEWINNUNGSSYSTEM MIT DEM WÄRMETAUSCHER
ÉCHANGEUR DE CHALEUR, DISPOSITIF DE RÉCUPÉRATION D'ÉNERGIE ET SYSTÈME DE RÉCUPÉRATION D'ÉNERGIE COMPORTANT L'ÉCHANGEUR DE CHALEUR

(30) Priority: 19.08.2011 HK 11108771
(43) Date of publication of application: 25.06.2014
(73) Proprietor: Allied Castle International Limited, Kowloon, Hong Kong (CN)
(72) Inventor: CHAN, Sai Fai, Kowloon Hong Kong (CN)
(74) Representative: Dehns
(86) International application number: PCT/CN2012/000966
(87) International publication number: WO 2013/026258

(56) References cited:
- CN-U- 2 112 132
- CN-U- 201 697 506
- DE-U1- 20 022 211
- JP-A- H10 309 451
- JP-A- S63 163 792
- US-A- 2 134 058
- US-A- 2 134 058
- US-A- 4 431 049
- US-A1- 2008 295 784

## Description

### FIELD OF THE INVENTION

The present invention relates to a heat exchanger, an energy recovery device including the heat exchanger, and an energy recovery system, and particularly to a heat exchanger for recovering energy from a fluid, an energy recovery device including the heat exchanger, and an energy recovery system.

### BACKGROUND OF THE INVENTION

In daily life, people use different washing facilities for cleaning and washing. The facilities include, for example, bathroom showers, sinks, hair washing tanks and the like. However, if the washing facilities use hot water as washing medium, the discharge of such wastewater which contains large amount of heat energy would result in energy waste.

Various methods were adopted with the aim to recover and utilize the energy lost in vain. For example, U.S. Patent US4,304,292 discloses a heat recovery device to be placed in a bathroom. With reference to FIG. 1A and FIG. 1B, a heat exchanger thereof includes helical heat exchange tubes 114a and 116 formed by bending of metal tubes and are concentrically placed in helical wastewater pits 104 and 106 opened on an upper surface 102 of a base 100. The wastewater generated by the shower flows downwards via through holes 128 from floor 124a towards a drain fitting 110 and a drain conduit 112a below a center drain opening 108 along the helical wastewater pits 104 and 106. Cold water flows through the helical heat exchange tubes 114a and 116 from an inlet pipe 120 via a faucet pipe 56' and undergoes heat exchange with the wastewater outside the heat exchange tubes to gain in temperature, then is discharged via an outlet pipe 122a. However, the heat recovery device has various drawbacks which will be discussed in the below.
(1) Low heat recovery efficiency
   (a) As the wastewater flows towards a drain port via a single pit, the pit must provide enough space for a large amount of wastewater to pass through. However, when water consumption is low, wastewater of small amount accumulates only at the bottom of the heat exchange tube. Therefore, the heat exchange tubes could only carry out heat exchange at the bottom portion, thus the recovery efficiency is limited.
   (b) When there is greater water consumption, the whole pit is filled with wastewater. Due to the resistance of the wall of the heat exchange tube and the peripheral wall of the pit, a substantial amount of the wastewater flows past through a gap on the top of the heat exchange tube at high speed and fails to undergo heat exchange with the cold water in the heat exchange tube. Further and under the effect of laminar flow phenomena the fast flowing hot water fails to be thoroughly mixed with the wastewater cooled in vicinity of the wall of the heat exchange tube, leading to low recovery efficiency.
   (c) As the cold water flows towards the outlet via a single pipeline, the heat exchange tube must have a considerably large inner diameter sufficient for the cold water to pass through. However, due to heat exchange can only be carried out on the tube wall and the resistance of the tube wall, the cold water in the center of the heat exchange tube may pass at a higher speed and will not be sufficiently heated. With the addition of laminar flow phenomena of the water current in the tube, the cold water in the center fails to be thoroughly mixed with the water heated at the tube wall, which also leads to low recovery efficiency.
(2) A longer time is required to achieve the maximum temperature: the entire heat exchange process can be completed only if the cold water flows from one end of the heat exchange tube to the other end. However, based on the above reasons, in order to increase the amount of heat recovery the heat exchange tube must have a considerable length so that the cold water would take a longer time to reach the maximum stable temperature.
(3) The heat exchange tube is bent and coiled into a helical shape. As most bathrooms are square shaped, thus it is unable to make full use of the bathroom floor for heat exchange.
(4) The heat exchange device is only suitable for placing in the bathroom and is not suitable for placing in sinks or other washing facilities.

US 2,134,058 discloses a heat exchanger according to the preamble of claim 1.

### SUMMARY OF THE INVENTION

An objective of the present invention is to provide a heat exchanger for recovering energy from a fluid, an energy recovery device including the heat exchanger and an energy recovery system having high energy recovery efficiency, which is simple in installation, convenient in use and easy in cleaning.

According to one aspect of the present invention, there is provided a heat exchanger according to claim 1.

In the heat exchanger, the second fluid flow guide and the first fluid flow guide are configured such that the second fluid flowing through the plurality of heat exchange tubes and the first fluid flowing through the first fluid annular spaces flow in opposite directions.

In the heat exchanger, the first fluid flow guide is detachably installed into the cavity, and the second fluid flow guide is detachably installed into the cavity.

In the heat exchanger, a centerline of each heat exchange tube is linear, and the centerlines may be parallel to each other.

In the heat exchanger, cross sections of the heat exchange tubes are circular, and may also be polygonal.

In the heat exchanger, the first fluid annular spaces are uniform.

In the heat exchanger, inside of the fluid annular spaces are provided with a first fluid non-axial flow guide structure for promoting flow of the first fluid in the non-axial direction.

In the heat exchanger, the first fluid non-axial flow guide structure is a helical structure.

In the heat exchanger, the first fluid non-axial flow guide structure is formed on the inner walls of the first fluid ducts, and may also be integrally connected with the heat exchange tubes.

In the heat exchanger, the centers of the heat exchange tubes are provided with strip baffles, between therein and the inner walls of the heat exchanger tubes the second fluid annular spaces for the second fluid to pass through are formed.

In the heat exchanger, one end of the heat exchange tubes is closed. The strip baffles are hollow strip baffles, with pipelines formed therein, and are connected with the second fluid annular spaces in vicinity of the closed end of the heat exchange tubes.

In the heat exchanger, the second fluid annular spaces are uniform.

In the heat exchanger, the second fluid annular spaces are internally provided with a second fluid non-axial flow guide structure for promoting flow of the second fluid in the non-axial direction.

In the heat exchanger, the second fluid non-axial flow guide structure is a helical structure.

In the heat exchanger, the second fluid non-axial flow guide structure is integrally connected with the heat exchange tubes, and may also be integrally connected with the strip baffles.

In the heat exchanger, the hollow strip baffles are made of heat-insulating materials or heat-insulating structures.

An embodiment of the invention further provides a heat exchanger, including a first fluid flow guide having an opening, a cavity and a first fluid outlet, where the opening is used for introducing a first fluid so that the first fluid enters the cavity and is discharged from the first fluid outlet; and a second fluid flow guide having a second fluid inlet, a flow diversion chamber, a plurality of heat exchange tubes, a plurality of strip baffles, a flow collection chamber and a second fluid outlet. One end of the heat exchange tubes is closed while the other end connects with the flow diversion chamber. The strip baffles are hollow with pipelines formed therein and are each placed respectively in the heat exchange tubes and form second fluid annular spaces between therein and inner walls of the heat exchange tubes. One end of the hollow pipelines of the strip baffles connects with the second fluid annular spaces in vicinity of the closed end of the heat exchange tubes. The other end connects with the flow diversion chamber. The second fluid inlet is used for intake of a second fluid whose temperature is different from that of the first fluid so that the second fluid enters the second fluid annular spaces in the plurality of heat exchange tubes in parallel after entering the flow diversion chamber, the same enters the hollow pipelines of the strip baffles in vicinity of the closed end of the heat exchange tubes, is then collected in the flow collection chamber and is finally discharged from the second fluid outlet. The plurality of heat exchange tubes are placed in the cavity of the first fluid flow guide. The second fluid flowing through the plurality of heat exchange tubes undergoes heat exchange with the first fluid flowing through the cavity so that the temperature of the second fluid changes and the second fluid is discharged from the second fluid outlet.

In the heat exchanger, uniform gaps are formed between the plurality of heat exchange tubes.

In the heat exchanger, the second fluid annular spaces are internally provided with a helical flow guide structure. The outer walls of the plurality of heat exchange tubes are provided with a helical flow guide structure.

According to a second aspect of the present invention, an energy recovery device is provided, which includes the heat exchanger described above and an external means for changing the temperature of the second fluid discharged from the second fluid outlet to an appropriate temperature of use and making the second fluid serve as the first fluid entered the opening of the first fluid flow guide of the heat exchanger after use.

In the energy recovery device, the external means includes a heater or cooler for making the second fluid discharged from the second fluid outlet after heat exchange heated or cooled. The temperature of the first fluid entered the opening of the first fluid flow guide after use is higher than or lower than that of the second fluid entered the second fluid inlet.

In the energy recovery device, the external means includes a mixer that mixes the second fluid discharged from the second fluid outlet after heat exchange with an external pre-heated or pre-cooled third fluid to increase the temperature or decrease the temperature, and the temperature of the first fluid entered the opening of the first fluid flow guide after use is higher than or lower than that of the second fluid entered the second fluid inlet.

In the energy recovery device, the first fluid is wastewater, and the second fluid is clean water.

In the energy recovery device, the heat exchanger is installed on a base of a shower in a bathroom, or is installed to the bottom of a bathtub or a sink of a washing facility, or is integrally formed with the base of the shower or the bottom of the bathtub or the sink of the washing facility.

According to a third aspect of the present invention, an energy recovery system is provided, which includes: the energy recovery device described above; a second fluid source, where the second fluid inlet of the heat exchanger is directly or indirectly connected to the second fluid source for providing the second fluid for the second fluid inlet; and a fluid discharge pipeline, where the first fluid outlet of the first fluid flow guide of the heat exchanger is directly or indirectly connected to the fluid discharge pipeline, where an inlet of the heater or cooler is directly or indirectly connected to the second fluid outlet of the heat exchanger, for heating or cooling the second fluid discharged from the second fluid outlet, and an outlet of the heater or cooler is used for discharging the heated or cooled second fluid for use, where the opening of the first fluid flow guide of the heat exchanger enters the first fluid after use whose temperature is higher than or lower than the temperature of the second fluid, so that the first fluid undergoes heat exchange with the second fluid flowing through the plurality of heat exchange tubes of the second fluid flow guide, and the temperature of the second fluid is increased or decreased and the second fluid is discharged from the second fluid outlet, where the first fluid after heat exchange is discharged to the fluid discharge pipeline via the first fluid outlet.

According to the third aspect of the present invention, an energy recovery system is further provided, which includes: the energy recovery device described above; a second fluid source, where the second fluid inlet of the heat exchanger is directly or indirectly connected to the second fluid source, for providing the second fluid for the second fluid inlet; a third fluid source, for providing the pre-heated or pre-cooled third fluid; and a fluid discharge pipeline, where the first fluid outlet of the first fluid flow guide of the heat exchanger is directly or indirectly connected to the fluid discharge pipeline, where the mixer includes a fluid temperature and flow regulator, whose inlet is directly or indirectly connected to the second fluid outlet of the heat exchanger and the third fluid source, for mixing the second fluid discharged from the second fluid outlet after heat exchange and the pre-heated or pre-cooled third fluid from the third fluid source and regulating temperature and flow thereof for use, and the mixed fluid, after use, becomes the first fluid entered the opening of the first fluid flow guide, where the opening of the first fluid flow guide of the heat exchanger enters the first fluid after use whose temperature is higher than or lower than the temperature of the second fluid, so that the first fluid undergoes heat exchange with the second fluid flowing through the plurality of heat exchange tubes of the second fluid flow guide, and the temperature of the second fluid is increased or decreased and the second fluid is discharged from the second fluid outlet, where the first fluid after heat exchange is discharged to the fluid discharge pipeline via the first fluid outlet.

The heat exchanger, the energy recovery device and the energy recovery system according to the present invention can effectively recover energy in a fluid; meanwhile, they are simple in installation, convenient in use, and easy in cleaning, which are suitable for use in showers or sinks or other facilities.

### BRIEF DESCRIPTION OF THE DRAWINGS

The basic structure of the present invention is illustrated below with reference to the accompanying drawings, where:

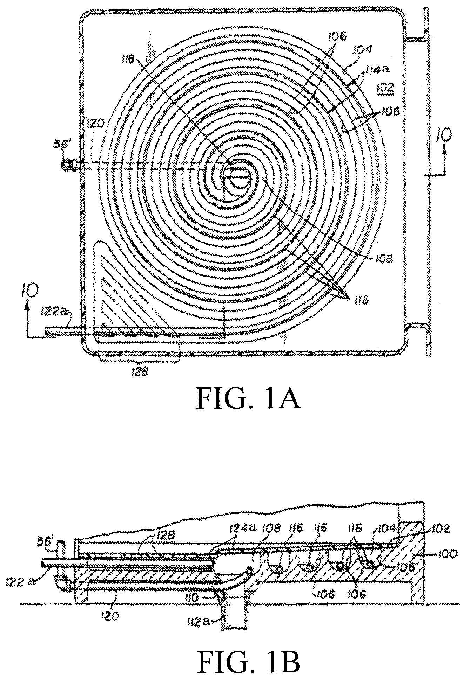

FIG. 1A is a planar view of a heat recovery device in the prior art;
FIG. 1B is a sectional view along Line 10-10 in FIG. 1A, which shows structural details of a heat exchanger thereof;
FIG. 2 is a schematic structural view of a first embodiment of a heat exchanger according to the present invention;
FIG. 3 is an exploded perspective view of the heat exchanger shown in FIG. 2;
FIG. 4 is a partial sectional perspective view of a cold water flow guide shown in FIG. 3;
FIG. 5 is a sectional view along a section cutting plane V-V in FIG. 2, which shows an assembly structure of the heat exchanger;
FIG. 6 is a schematic structural view of a second embodiment of the heat exchanger according to the present invention;
FIG. 7 is an exploded perspective view of the heat exchanger shown in FIG. 6;
FIG. 8 is an exploded perspective view of a wastewater flow guide shown in FIG. 7;
FIG. 9 is a perspective view of a cold water flow guide shown in FIG. 7;
FIG. 10 is an exploded perspective view of the cold water flow guide shown in FIG. 7;
FIG. 11 is a broken-open perspective view of the cold water flow guide shown in FIG. 7;
FIG. 12 is a broken-open perspective view of the heat exchanger shown in FIG. 6, which shows an assembly structure of the heat exchanger;
FIG. 13 is a schematic structural view of a third embodiment of the heat exchanger according to the present invention;
FIG. 14 is an exploded perspective view of the heat exchanger shown in FIG. 13;
FIG. 15 is a perspective view of a cold water flow guide shown in FIG. 14;
FIG. 16 is a broken-open perspective view of the cold water flow guide shown in FIG. 15; and
FIG. 17 is a broken-open perspective view of the heat exchanger shown in FIG. 13, which shows an assembly structure of the heat exchanger.

### DETAILED DESCRIPTION OF THE INVENTION

The present invention relates to a heat exchanger and an energy recovery device including the heat exchanger for recovering energy from a fluid. The fluid may be liquid , for example, water or other liquids, or steam or the like. Embodiments in which the heat exchanger of the present invention is combined with a shower in a bathroom and a sink of a washing facility are described below only by way of examples with reference to the accompanying drawings. It should be understood that the present invention is not limited thereto.

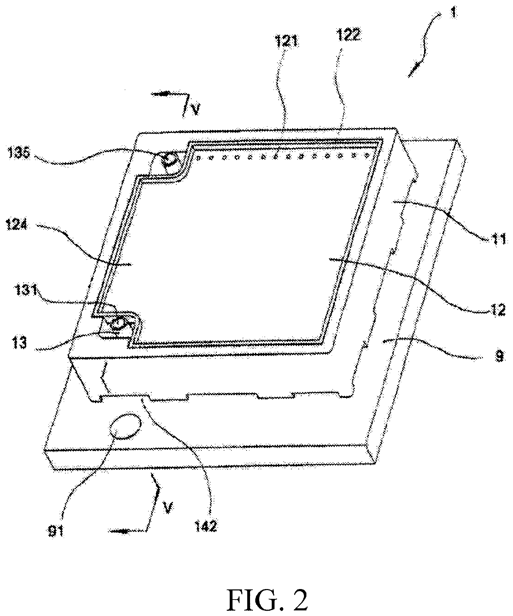

FIG. 2 to FIG. 5 show the structure of a first embodiment of a heat exchanger according to the present invention, and describe the situation where the heat exchanger is combined with a shower in a bathroom.

As shown in FIG. 2 to FIG. 4, a heat exchanger 1 is installed on a bathroom base 9, which comprises a wastewater collector 11, a wastewater flow guide 12 and a cold water flow guide 13.

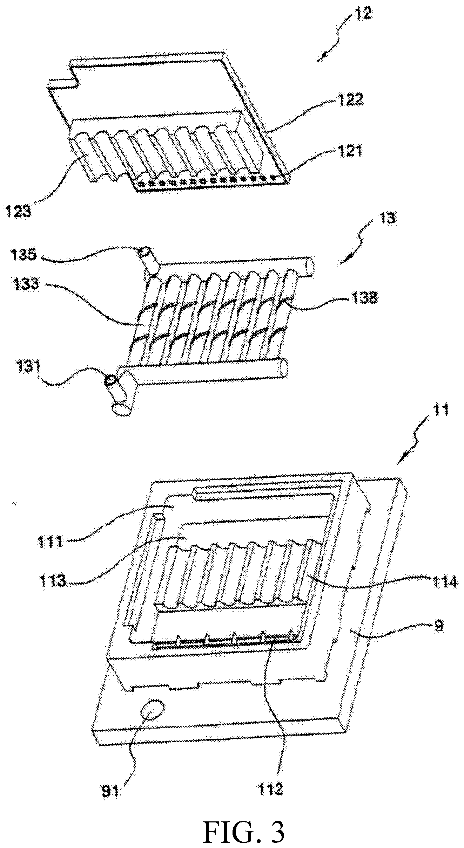

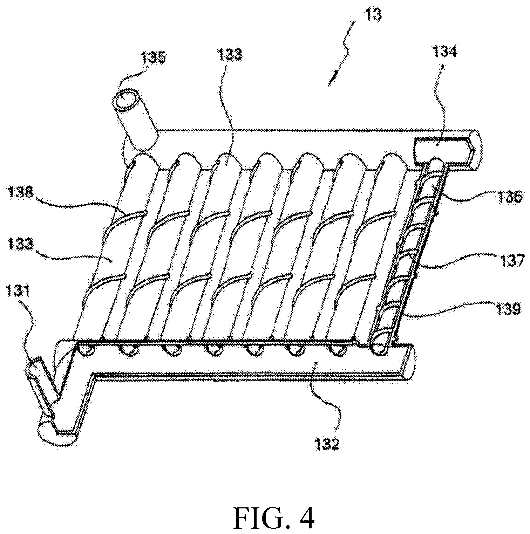

As shown in FIG. 3 and FIG. 4, the wastewater collector 11 has an opening 111, a wastewater outlet 112, a cavity 113 and a plurality of semicircular ducts 114. The wastewater flow guide 12 has surrounding edges 122, through holes 121, a plurality of semicircular ducts 123 disposed at the bottom and a platform 124. The cold water flow guide 13 has a cold water inlet 131, a flow diversion chamber 132, a plurality of heat exchange tubes 133, a flow collection chamber 134, a tepid water outlet 135 and strip baffles 136 positioned within the heat exchange tubes 133. Surfaces of the strip baffles 136 are protruded to form a cold water flow guide walls 137 of helical shape while the outer walls of the heat exchange tubes 133 are protruded to form a helical wastewater flow guide walls 138.

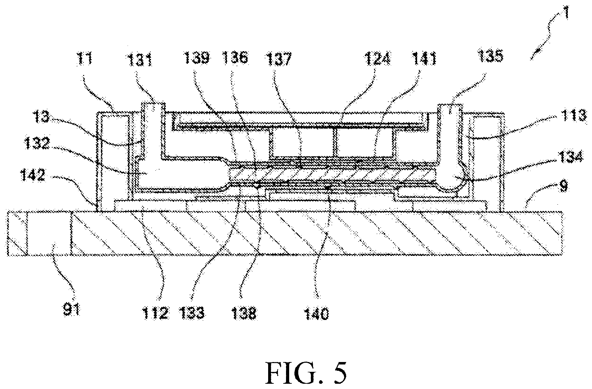

FIG. 5 shows an assembly structure of the heat exchanger 1. The wastewater flow guide 12 is laid flat in the opening 111 of the wastewater collector 11 so that the plurality of semicircular ducts 114 of the wastewater collector 11 and the plurality of semicircular ducts 123 at the bottom of the wastewater flow guide 12 jointly form a plurality of circular pipelines leading to the wastewater outlet 112. The cold water flow guide 13 is disposed in the cavity 113 so that the plurality of heat exchange tubes 133 and a plurality of circular pipelines formed by upper and lower semicircular ducts 114 and 123 are substantially concentric, so as to form substantially uniform wastewater annular spaces 141 surrounding the plurality of heat exchange tubes 133. During assembly of the heat exchanger, gaps may be retained between partition walls between the semicircular ducts 114 of the wastewater collector 11 and partition walls between the semicircular ducts 123 at the bottom of the wastewater flow guide 12 such that the circular pipelines formed connect with each other.

During use, the cold water inlet 131 is directly or indirectly connected to a cold water source (not shown) of a building, the tepid water outlet 135 is connected to an external heater (not shown) for heating tepid water discharged from the tepid water outlet 135 into optimum-temperature water, or to a water temperature and flow regulator (not shown) of a bathroom for mixing tepid water discharged from the tepid water outlet 135 with hot water from a hot water source (not shown) of the bathroom into optimum-temperature water for shower. In the event that a person on the platform 124 takes a shower, the wastewater from the shower is collected at the platform 124 and flows into the cavity 113 via the through holes 121, then flows into the plurality of wastewater annular spaces 141 towards the wastewater outlet 112, then flows into a bathroom discharge port 91 from a gap 142 between the wastewater collector 11 and the bathroom base 9. Simultaneously, after being guided into the cold water flow guide 13 from the cold water inlet 131, the cold water enters the cold water annular spaces 139 between the plurality of heat exchange tubes 133 and the strip baffles 136 in parallel manner via the flow diversion chamber 132, and then flows into the flow collection chamber 134. Meanwhile, the cold water undergoes heat exchange with hot wastewater flowing in an opposite direction outside the tubes through walls of the heat exchange tubes and is heated up as tepid water. The tepid water, after being collected within the flow collection chamber 134, is then fed into the heater or the water temperature and flow regulator (not shown) in external means of the bathroom at the tepid water outlet 135 for shower.

The wastewater flowing through the wastewater annular spaces 141 is resisted by the helical wastewater flow guide walls 138 protruding on outer walls of the heat exchange tubes 133. One part thereof may advance helically along the helical wastewater flow guide walls 138, while one part thereof may advance linearly at gaps 140 between top section of the helical wastewater flow guide walls 138 and inner walls of a plurality of circular pipelines formed by upper and lower semicircular ducts 114 and 123. Two water flows interfere with each other effectively destroy the laminar flow of the wastewater, such that the advancing wastewater can be thoroughly mixed and undergo effective heat exchange. In addition, the helical wastewater flow guide walls 138 also increase heat exchange surfaces of the heat exchange tubes 133 so as to increase heat exchange efficiency.

The cold water flowing through the cold water annular spaces 139 is resisted by helical cold water flow guide walls 137 protruding from surfaces of the strip baffles 136. One part thereof may advance helically along the helical cold water flow guide walls 137 while one part thereof may linearly advance at gaps 142 between top section of the helical cold water flow guide walls 137 and inner walls of the heat exchange tubes. Two water flows interfere with each other effectively destroy the laminar flow of the cold water such that the advancing cold water can be thoroughly mixed and undergo effective heat exchange. In addition, as the strip baffles 136 occupy a significant volume in the center of the heat exchange tubes, there is only a small amount of cold water remains in the tubes. The heat exchanger 1 can rapidly reach a steady state during shower and reduces clean water lost for regulating the water temperature.

After the device has been operated for a certain period of time, dirt is inevitably accumulated inside the device and affects energy recovery efficiency. In order to maintain a high energy recovery efficiency, users can clean off the dirt inside the device by simply removing the wastewater flow guide 12. The users can even extract the cold water flow guide 13 for cleaning.

The above clearly describes one embodiment of the heat exchanger according to the present invention with reference to the accompanying drawings. However, the present invention is not limited thereto. For example, the cold water flow guide 13 shown in FIG. 4 has only eight heat exchange tubes 133. However, a floor of a one-square-meter bathroom is sufficient to place a heat exchanger having tens or even hundreds of heat exchange tubes in real application. In addition, the heat exchanger 1 as shown is an external part installed on the floor of the bathroom. However, the heat exchanger may also be installed at the bottom of a bathtub, on a shower base or integrally formed therewith. Further, the heat exchange tube of the heat recovery device shown is circular, or may also be a rectangular or polygonal structure in order to increase the heat exchange area.

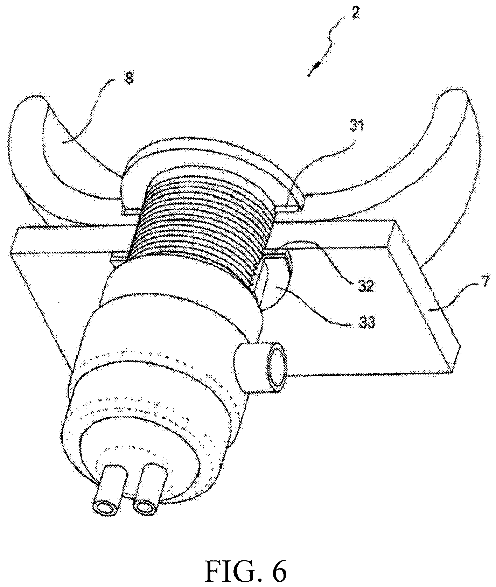

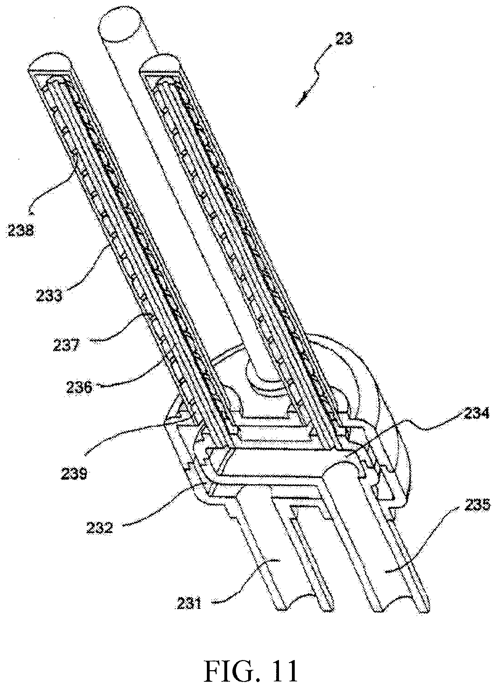

FIG. 6 to FIG. 12 show a second embodiment of the heat exchanger according to the present invention and illustrate the situation where the heat exchanger is combined with a sink of a washing facility.

As shown in FIG. 6, a heat exchanger 2 is installed underneath a sink 8 and a tabletop 7 and positioned with waterproof pads 31 and 32 and a fastener 33.

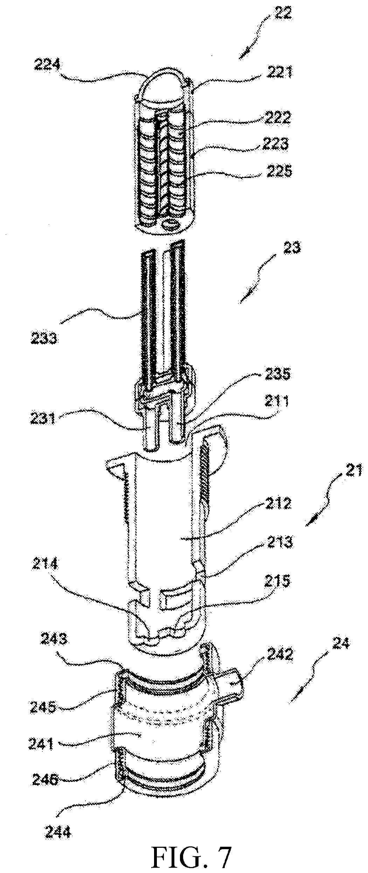

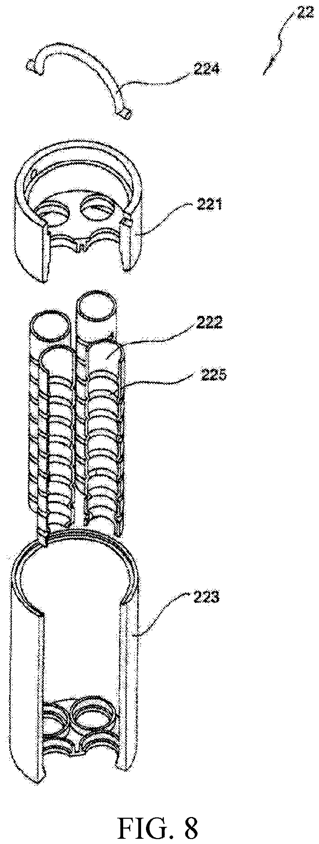

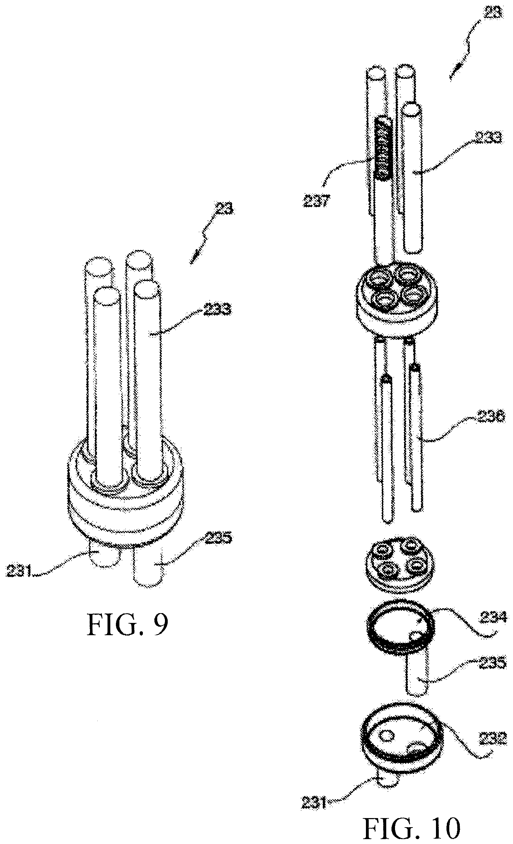

As shown in FIG. 7 and FIG. 8, the heat exchanger 2 includes a wastewater collector 21, a wastewater flow guide 22, a cold water flow guide 23 (refer to FIG. 9 to FIG. 11) and a wastewater connector 24. The wastewater collector 21 has an opening 211, a cavity 212, a wastewater outlet 213 and two through holes 214 and 215 located at the bottom. The wastewater flow guide 22 includes a base 223, a plurality of cylinders 222, a top cover 221 and a handle 224. The cylinders 222 are formed by blow moulding, internally provided with helical wastewater flow guide walls 225. The wastewater connector 24 has a cavity 241 and a wastewater outlet 242, and the wastewater connector 24 is positioned onto the wastewater collector 21 with waterproof pads 243 and 244 and screw caps 245 and 246.

As shown in FIG. 9 to FIG. 11, the cold water flow guide 23 includes a cold water inlet 231, a flow diversion chamber 232, a plurality of heat exchange tubes 233 each with one closed end, hollow strip baffles 236, a flow collection chamber 234 and a tepid water outlet 235. Inner walls of the plurality of heat exchange tubes 233 are protruded to form helical cold water flow guide walls 237.

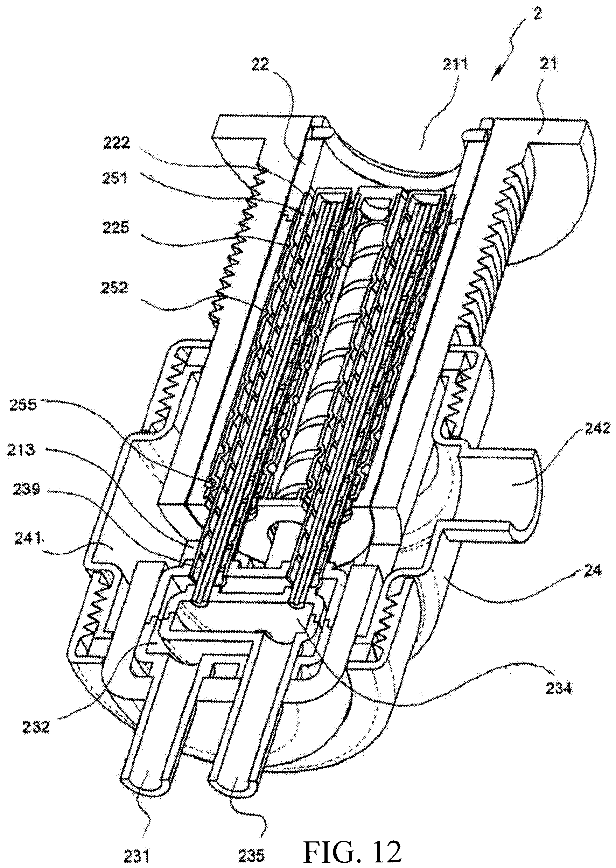

The wastewater flow guide 22 is detachably disposed within the cavity 212 of the wastewater collector 21 such that the plurality of cylinders 222 internally provided with helical wastewater flow guide walls 225 form a plurality of wastewater ducts between the opening 211 and the wastewater outlet 213. Further, the plurality of heat exchange tubes 233 and the plurality of cylinders 222 are internally provided with helical wastewater flow guide walls 225 and are substantially concentric, forming substantially uniform wastewater annular spaces 251 (refer to FIG. 12) surrounding the plurality of heat exchange tubes 233.

FIG. 12 shows an assembly structure of the heat exchanger 2. During use, the cold water inlet 231 is directly or indirectly connected to a cold water source (not shown) of a building. The tepid water outlet 235 is connected to an external heater (not shown) for heating tepid water discharged from the tepid water outlet 235 into optimum-temperature water, or to a water temperature and flow regulator (not shown) of a sink for mixing tepid water discharged from the tepid water outlet 235 with hot water from a hot water source (not shown) of the sink into optimum-temperature water for washing purposes. Hot wastewater generated during washing flows through the opening 211 of the wastewater collector, enters the wastewater flow guide 22, flows into the wastewater outlet 213 from the wastewater annular spaces 251 between the cylinders 222 internally provided with helical wastewater flow guide walls 225 and the heat exchange tubes 233, enters the cavity 241 of the wastewater connector 24, and further to the wastewater outlet 242 which connects to a discharge pipe (not shown) of the building. Simultaneously, cold water, after being fed into the cold water flow guide 23 from the cold water inlet 231, enters cold water annular spaces 239 between the plurality of heat exchange tubes 233 and the hollow strip baffles 236 in parallel manner via the flow diversion chamber 232 and upwards to the closed end of the heat exchange tubes 233, then towards the flow collection chamber 234 via pipelines in the center of the hollow strip baffles 236. Meanwhile, the cold water undergoes heat exchange with hot wastewater flowing outside the heat exchange tubes 233 in an opposite direction through walls of the heat exchange tubes and is heated as tepid water. The tepid water, after being collected within the flow collection chamber 234, is fed into the external heater (not shown) at the tepid water outlet 235 to be heated into optimum-temperature water, or the tepid water is fed into the water temperature and flow regulator (not shown) of the sink to be mixed with hot water into optimum-temperature water for use.

The wastewater flowing through the wastewater annular spaces 251 is resisted by helical wastewater flow guide walls 225 of helical cylinders 222. One part thereof may advance helically along the helical wastewater flow guide walls 225, while one part thereof may linearly advance at gaps 252 between tops of the helical wastewater flow guide walls 225 and the heat exchange tubes 236. The two water flows interfere with each other effectively destroy the laminar flow of the wastewater so that the advancing wastewater can be thoroughly mixed and undergo effective heat exchange.

The cold water flowing through the cold water annular spaces 239 is resisted by helical cold water flow guide walls 237 on inner walls of the heat exchange tubes 233. One part thereof may advance helically along the helical cold water flow guide walls 237, while one part thereof may linearly advance at gaps 238 between the helical cold water flow guide walls 237 and the hollow strip baffle 236. The two water flows interfere with each other effectively destroy the laminar flow of the cold water so that the advancing cold water can be thoroughly mixed and undergo effective heat exchange. In addition, the helical wastewater flow guide walls 237 also increase heat exchange surfaces of the heat exchange tubes 233 so as to increase heat exchange efficiency.

In order to avoid the tepid water at the center of the hollow strip baffles 236 from flowing towards the flow collection chamber 234 to undergo unnecessary heat exchange with cold water outside the hollow strip baffles 236 (of which the temperature has not been completely raised), the hollow strip baffles 236 may be made of good thermal insulators such as plastics, or formed by good insulators, for example, hollowed double-wall structures.

After the device has been used for a period of time, dirt is inevitably accumulated inside the device and affects energy recovery efficiency. In order to maintain high heat recovery efficiency, users can take out the whole wastewater flow guide 22 simply by holding the handle 224. The dirt inside the helical cylinders 222 may be rinsed with clean water or clean up the dirt with a long-handled small round brush. As the helical wastewater flow guide walls 225 in the helical cylinders 222 surround the heat exchange tubes 236, especially one to two turns of helical wastewater flow guide walls 225 at the bottommost part are designed to tightly sleeve the heat exchange tubes 233, the dirt on the heat exchange tubes 233 will be scratched off together when the wastewater flow guide 22 is taken out. It is not necessary toto deliberately clean the heat exchange tubes 233.

The above clearly describes the second embodiment of the heat exchanger according to the present invention with reference to the accompanying drawings but the present invention is not limited thereto. For example, the cold water flow guide 23 shown in the figures has only four heat exchange tubes 236. However, a hair washing tank commonly used in hair salons is taken as an example at present. The pore size from its center to the water is about 85 mm and the heat exchanger 2 disposed therein is sufficient to accommodate tens of heat exchange tubes 233. In addition, the heat exchanger shown is an external member mounted underneath the sink may also be installed to a bathroom or integrally formed with the sink or bathroom with slight modifications. Besides, as the hollow strip baffles 236 occupy a substantial amount of space at the center of the heat exchange tubes, only a small amount of cold water remains in the tubes. Therefore, the heat exchanger can rapidly reach a steady state during use and hence reducing clean water lost in regulating the water temperature.

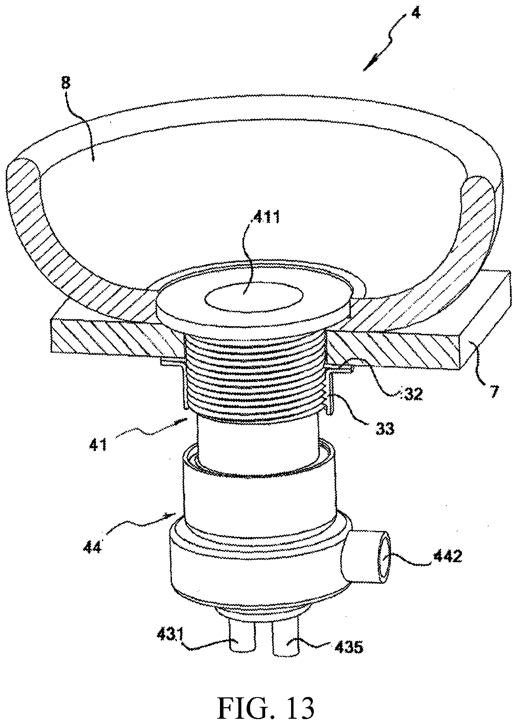

FIG. 13 to FIG. 17 show a third embodiment of the heat exchanger according to the present invention and describe the situation where the heat exchanger is combined with a sink of a washing facility.

As shown in FIG. 13, a heat exchanger 4 is installed below a sink 8 and a tabletop 7 and is positioned with a waterproof pad 32 and a fastener 33.

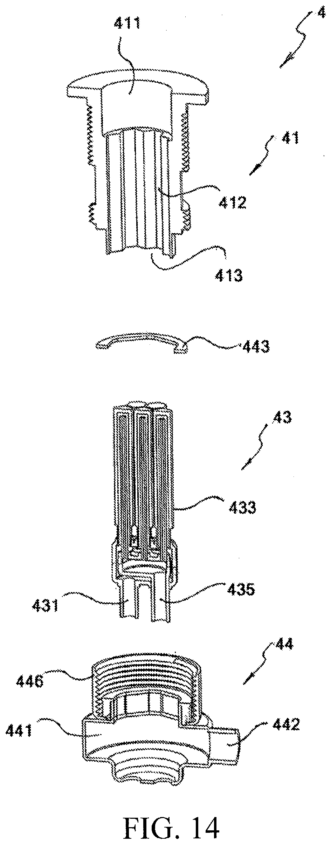

As shown in FIG. 14, the heat exchanger 4 includes a wastewater collector 41, a cold water flow guide 43 and a wastewater connector 44. The wastewater collector 41 has an opening 411, a cavity 412 and a wastewater outlet 413. The wastewater connector 44 is positioned onto the wastewater collector 41 with a waterproof pad 443 and a screw cap 446.

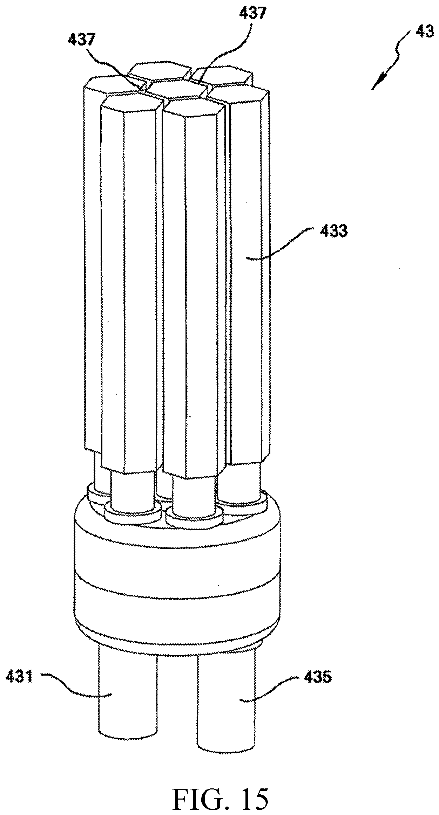

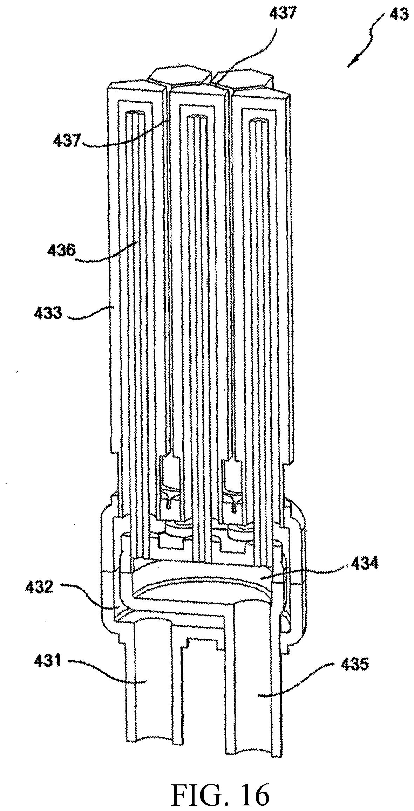

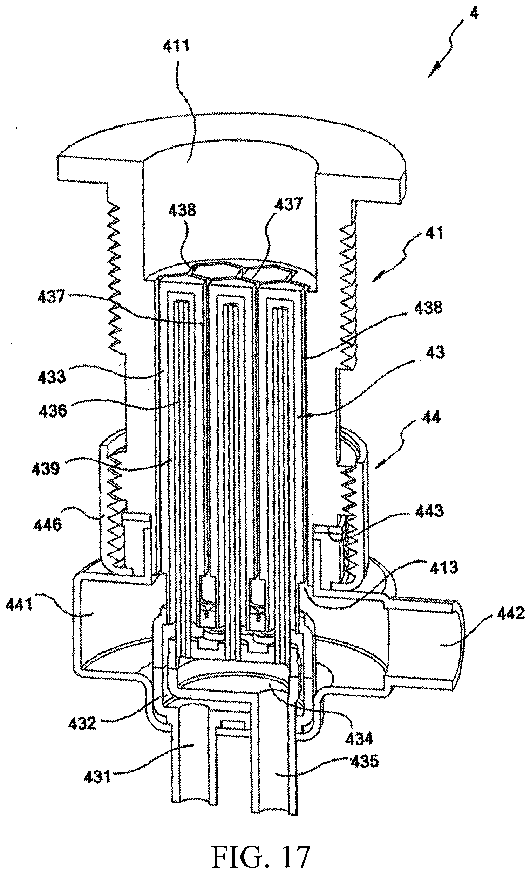

As shown in FIG. 15 and FIG. 16, the cold water flow guide 43 includes a cold water inlet 431, a flow diversion chamber 432, a plurality of heat exchange tubes 433 with one closed end, a plurality of hollow strip baffles 436, a flow collection chamber 434 and a tepid water outlet 435. One end of the heat exchange tubes 433 is closed, while the other end connects with the flow diversion chamber 434. The strip baffles 436 are hollow with pipelines formed therein. The strip baffles 436 are each respectively placed in the heat exchange tubes 433and formed a second fluid annular spaces 439 (see FIG. 17) between the strip baffles 436 and inner walls of the heat exchange tubes 433. One end of the hollow pipelines of the strip baffles 436 connects with the second fluid annular spaces 439 in vicinity of the closed end of the heat exchange tubes 433, while the other end connects with the flow diversion chamber 434. In the second fluid annular spaces 439, similar to the structure in the first or second embodiment, outer walls of the plurality of hollow strip baffles 436 or inner walls of the plurality of heat exchange tubes 433 may be provided with helical cold water flow guide walls (not shown) so as to increase heat exchange efficiency. As shown in FIG. 15 and FIG. 16, substantially uniform gaps 437 are formed between the heat exchange tubes 433. Similar to the structure in the first embodiment, outer walls of the plurality of heat exchange tubes 433 may be provided with helical flow guide walls (not shown) so as to increase heat exchange efficiency.

FIG. 17 shows an assembly structure of the heat exchanger 4. During use, the cold water inlet 431 is directly or indirectly connected to a cold water source (not shown) of a building. The tepid water outlet 435 is connected to an external heater (not shown) for heating tepid water discharged from the tepid water outlet 435 into optimum-temperature water, or the tepid water outlet 435 is connected to a water temperature and flow regulator (not shown) of a sink for mixing tepid water discharged from the tepid water outlet 435 with hot water from a hot water source (not shown) of the sink into optimum-temperature water for washing purposes. Hot wastewater generated during washing flows through the opening 411 of the wastewater collector enters the substantially uniform gaps 437 between the heat exchange tubes 433, or enters the substantially uniform gaps 438 formed by the plurality of heat exchange tubes 433 and the inner wall of the wastewater collector 41 to flow towards the wastewater outlet 413, enters the cavity 441 of the wastewater connector 44, and then to the wastewater outlet 442 connected to a discharge pipe (not shown) of the building. Simultaneously, after being directed into the cold water flow guide 43 from the cold water inlet 431, the cold water enters cold water annular spaces 439 between the plurality of heat exchange tubes 433 and the hollow strip baffles 436 in parallel manner via the flow diversion chamber 432, and flow upwards to the closed end of the heat exchange tubes 433. Cold water flows towards the flow collection chamber 434 via pipelines in the center of the hollow strip baffles 436. Meanwhile, the cold water undergoes heat exchange with hot wastewater flowing outside the heat exchange tubes 433 in an opposite direction through walls of the heat exchange tubes and heated into tepid water. The tepid water, after being collected within the flow collection chamber 434, is fed into the external heater (not shown) via the tepid water outlet 435 to be heated into optimum-temperature water, or is fed into the water temperature and flow regulator (not shown) of the sink to be mixed with hot water into optimum-temperature water for use.

The following describes a first embodiment of an energy recovery device including the foregoing heat exchangers 1, 2, and 4 according to the present invention. The energy recovery device has a heater (not shown) as external means such that the tepid water (second fluid) discharged from the tepid water outlets 135 and 235 (second fluid outlets) of the heat exchangers 1 and 2 after heat exchange heated through the heater to an appropriate temperature of use and serve as the wastewater (first fluid) entered the openings 111 and 211 of the wastewater collectors 11 and 21 (first fluid collectors) of the heat exchangers 1 and 2 after use. The temperature of the first fluid entered the opening of the first fluid collector after use is higher than that of the second fluid entered to the second fluid inlet.

The following describes a second embodiment of the energy recovery device including the aforementioned heat exchangers 1, 2, and 4 according to the present invention. The energy recovery device has an external means (not shown), where the external means includes a mixer (not shown) for mixing the tepid water (second fluid) discharged from the tepid water outlets 135, 235, and 435 (second fluid outlets) after heat exchange with external pre-heated hot water (third fluid) to increase the temperature, and the temperature of the first fluid entered the opening of the first fluid collector is higher than that of the second fluid entered the second fluid inlet after use.

On the other hand, an energy recovery system (not shown) according to the present invention includes the foregoing energy recovery device, and further includes a second fluid source, a fluid heater or cooler, a third fluid source, a fluid temperature and flow regulator and a fluid discharge pipeline. An embodiment of the energy recovery system according to the present invention is described below only by way of examples in combination with the foregoing heat exchangers 1 and 2 integrated with a shower of a bathroom and a sink of a washing facility. It should be understood that the present invention is not limited thereto.

In this embodiment, the second fluid source may be a cold water source (not shown), and the cold water inlets 131, 231, and 431 (second fluid inlets) of the heat exchangers 1, 2, and 4 are directly or indirectly connected to the cold water source for providing cold water (second fluid) for the cold water inlets 131, 231, and 431. The fluid heater or cooler may be a water heater (not shown) for heating the second fluid discharged from the tepid water outlets 135, 235 and 435 (second fluid outlets) and then discharging the heated second fluid. The present invention may also provide a third fluid source to replace the fluid heater or cooler. The third fluid source may be a hot water source (not shown) for providing pre-heated hot water (third fluid). The fluid temperature and flow regulator may be a water temperature and flow regulator (not shown) directly or indirectly connected with the water heater or the hot water source and the tepid water outlets 135, 235 and 435 (second fluid outlets) of the heat exchangers 1, 2 and 4 for mixing the hot water heated by the water heater or the pre-heated hot water from the hot water source with the tepid water (second fluid) of which the temperature is increased and discharged from the tepid water outlets 135, 235 and 435 to be regulated into a temperature suitable for use. The mixed fluid, after use, becomes wastewater (first fluid). The openings 111, 211 and 411 of the wastewater collectors 11, 21 and 41 (first fluid collectors) of the heat exchangers 1, 2 and 4 let in the wastewater of which the temperature is higher than that of the cold water (second fluid) after use. The wastewater undergoes heat exchange with the cold water through the plurality of heat exchange tubes 133, 233 and 433 of the cold water flow guides 13, 23 and 43 (second fluid flow guides), resulting in increase of the cold water temperature. The cold water is then discharged from the tepid water outlets 135, 235 and 435. In this embodiment, a discharge pipeline (fluid discharge pipeline, not shown) is further provided in which the wastewater outlets 112, 213 and 413 (first fluid outlets) of the wastewater collectors 11, 21 and 41 are directly or indirectly connected to the discharge pipeline so as to discharge the wastewater after heat exchange.

The above describes the embodiments for recovering heat energy of the energy recovery device and the energy recovery system according to the present invention where the temperature of the second fluid is lower than that of the first fluid. However, the present invention may also be applied in recovering cold energy where the temperature of the second fluid is higher than that of the first fluid. The above clearly describes the embodiments of the heat exchanger, the energy recovery device and the energy recovery system according to the present invention with reference to the accompanying drawings, however it should be understood that the present invention is not limited thereto.

## Claims

1. A heat exchanger (1, 2, 4), comprising:
a first fluid flow guide (11, 21, 41) having an opening (111, 211, 411), a cavity (113, 212, 441) and a first fluid outlet (112, 213, 413), wherein the opening (111, 211, 411) is used for intake of a first fluid, and the first fluid outlet (112, 213, 413) is for discharging the first fluid;
a second fluid flow guide (13, 23, 43) having a second fluid inlet (131, 231, 431), a flow diversion chamber (132, 232, 432), a plurality of heat exchange tubes (133, 233, 433) each defining a fluid flow path, a flow collection chamber (134, 234, 434) and a second fluid outlet (135, 235, 435), the second fluid inlet (131, 231, 431) for intake of a second fluid having a temperature different from that of the first fluid,
wherein the flow diversion chamber (132, 232, 432) is arranged to divert a second fluid from the second fluid inlet (131, 231, 431) into the plurality of heat exchange tubes (133, 233, 433), for collection in the flow collection chamber (134, 234, 434) and subsequent discharge from the second fluid outlet,
the second fluid flow guide (13, 23, 43) being located in the cavity (113, 212, 441) of the first fluid flow guide (11, 21, 41) to form a plurality of first fluid spaces (141, 251, 437, 438) surrounding the plurality of heat exchange tubes (133, 233, 433), said first fluid spaces being connected with the opening (111, 211, 411) and the first fluid outlet (112, 213, 413) of the first fluid flow guide to guide the first fluid around the plurality of heat exchange tubes (133, 233, 433) from the opening (111, 211, 411) to the first fluid outlet (112, 213, 413),
wherein upon flow of the second fluid along the plurality of heat exchange tubes the second fluid undergoes heat exchange with the first fluid flowing through the first fluid spaces so as to change the temperature of the second fluid before the second fluid is subsequently discharged from the second fluid outlet, **characterized in that**
walls of the first fluid spaces and walls of the fluid flow path of each heat exchange tube comprise non-axial flow guide structures for promoting the first fluid and the second fluid to flow in a non-axial direction.

2. The heat exchanger according to claim 1, **characterized in that**, the second fluid flow guide and the first fluid flow guide are configured such that the second fluid flowing through the plurality of heat exchange tubes and the first fluid flowing through the first fluid spaces flow in opposite directions.

3. The heat exchanger according to claim 1, **characterized in that**, the first fluid non-axial flow guide structure is a helical structure.

4. The heat exchanger according to claim 1, **characterized in that**, the centers of the heat exchange tubes are provided with strip baffles.

5. The heat exchanger according to claim 4, **characterized in that**, one end of the heat exchange tubes is closed, the strip baffles are hollow strip baffles with pipelines formed therein and are arranged to divert the second fluid from the heat exchange tubes into the flow collection chamber (134, 234, 434).

6. An energy recovery device, comprising:
the heat exchanger according to any one of claims 1 to 5; and
external means, for making the temperature of the second fluid discharged from the second fluid outlet of the heat exchanger after heat exchange changed through the external means to an appropriate temperature of use and making the second fluid serve as the first fluid entered to the opening of the first fluid flow guide of the heat exchanger after use.

7. The energy recovery device according to claim 6, **characterized in that**, the external means comprises a heater or cooler for heating or cooling the second fluid discharged from the second fluid outlet after heat exchange, the temperature of the first fluid entered the opening of the first fluid flow guide after use is higher than or lower than that of the second fluid entered the second fluid inlet.

8. The energy recovery device according to claim 6, **characterized in that**, the external means comprises a mixer that mixes the second fluid discharged from the second fluid outlet with an external pre-heated or pre-cooled third fluid so as to increase or decrease the temperature, the temperature of the first fluid entered the opening of the first fluid flow guide after use is higher than or lower than that of the second fluid entered to the second fluid inlet.

9. An energy recovery system, comprising:
the energy recovery device according to claim 7;
a second fluid source, wherein the second fluid inlet of the heat exchanger is directly or indirectly connected to the second fluid source, for providing the second fluid for the second fluid inlet; and
a fluid discharge pipeline, wherein the first fluid outlet of the first fluid flow guide of the heat exchanger is directly or indirectly connected to the fluid discharge pipeline,
wherein an inlet of the heater or cooler is directly or indirectly connected to the second fluid outlet of the heat exchanger, for heating or cooling the second fluid being discharged from the second fluid outlet, and an outlet of the heater or cooler is used for discharging the heated or cooled second fluid,
wherein the opening of the first fluid flow guide of the heat exchanger receives the first fluid after use the temperature of said first fluid is higher than or lower than the temperature of the second fluid so that the first fluid undergoes heat exchange with the second fluid flowing through the plurality of heat exchange tubes of the second fluid flow guide, the temperature of the second fluid is increased or decreased and the second fluid is discharged from the second fluid outlet, wherein the first fluid after heat exchange is discharged to the fluid discharge pipeline via the first fluid outlet.

10. An energy recovery system, comprising:
the energy recovery device according to claim 8;
a second fluid source, wherein the second fluid inlet of the heat exchanger is directly or indirectly connected to the second fluid source, for providing the second fluid for the second fluid inlet;
a third fluid source, for providing the pre-heated or pre-cooled third fluid; and
a fluid discharge pipeline, wherein the first fluid outlet of the first fluid flow guide of the heat exchanger is directly or indirectly connected to the fluid discharge pipeline,
wherein the mixer comprises a fluid temperature and flow regulator, wherein the inlet of said mixer is directly or indirectly connected to the second fluid outlet of the heat exchanger and the third fluid source for mixing the second fluid discharged from the second fluid outlet after heat exchange and the pre-heated or pre-cooled third fluid from the third fluid source and regulating temperature and flow thereof for use, and the mixed fluid becomes the first fluid to enter the opening of the first fluid flow guide,
wherein the opening of the first fluid flow guide of the heat exchanger takes in the first fluid after use wherein the temperature of said first fluid is higher than or lower than the temperature of the second fluid, so that the first fluid undergoes heat exchange with the second fluid flowing through the plurality of heat exchange tubes of the second fluid flow guide, and the temperature of the second fluid is increased or decreased, the second fluid is discharged from the second fluid outlet, wherein the first fluid is discharged to the fluid discharge pipeline via the first fluid outlet after heat exchange.

## Patentansprüche

1. Wärmetauscher (1, 2, 4), umfassend:
eine erste Fluidströmungsführung (11, 21, 41), die eine Öffnung (111, 211, 411), einen Hohlraum (113, 212, 441) und einen ersten Fluidauslass (112, 213, 413) aufweist, wobei die Öffnung (111, 211, 411) zur Aufnahme eines ersten Fluids verwendet wird und der erste Fluidauslass (112, 213, 413) zum Ablassen des ersten Fluids dient;
eine zweite Fluidströmungsführung (13, 23, 43), die einen zweiten Fluideinlass (131, 231, 431), eine Strömungsumleitungskammer (132, 232, 432), eine Vielzahl von Wärmetauschrohren (133, 233, 433), von denen jedes einen Fluidströmungsweg definiert, eine Strömungssammelkammer (134, 234, 434) und einen zweiten Fluidauslass (135, 235, 435) aufweist, wobei der zweite Fluideinlass (131, 231, 431) zur Aufnahme eines zweiten Fluids eine Temperatur aufweist, die sich von derjenigen des ersten Fluids unterscheidet,
wobei die Strömungsumleitungskammer (132, 232, 432) angeordnet ist, um ein zweites Fluid von dem zweiten Fluideinlass (131, 231, 431) zu der Vielzahl von Wärmetauschrohren (133, 233, 433) zum Sammeln in der Strömungssammelkammer (134, 234, 434) und einem anschließenden Ablassen aus dem zweiten Fluidauslass umzuleiten,
wobei sich die zweite Fluidströmungsführung (13, 23, 43) in dem Hohlraum (113, 212, 441) der ersten Fluidströmungsführung (11, 21, 41) befindet, um eine Vielzahl von ersten Fluidräumen (141, 251, 437, 438) zu bilden, welche die Vielzahl von Wärmetauschrohren (133, 233, 433) umgeben, wobei die ersten Fluidräume mit der Öffnung (111, 211, 411) und dem ersten Fluidauslass (112, 213, 413) der ersten Fluidströmungsführung verbunden sind, um das erste Fluid um die Vielzahl von Wärmetauschrohren (133, 233, 433) von der Öffnung (111, 211, 411) zu dem ersten Fluidauslass (112, 213, 413) zu führen,
wobei sich das zweite Fluid bei Strömung des zweiten Fluids entlang der Vielzahl von Wärmetauschrohren einem Wärmetausch mit dem ersten Fluid, das durch die ersten Fluidräume strömt, unterzieht, um die Temperatur des zweiten Fluids zu verändern, bevor das zweite Fluid anschließend aus dem zweiten Fluidauslass abgelassen wird, **dadurch gekennzeichnet, dass**
Wände der ersten Fluidräume und Wände des Fluidströmungswegs von jedem Wärmetauschrohr nichtaxiale Strömungsführungsstrukturen umfassen, um das erste Fluid und das zweite Fluid dazu zu bringen, in einer nichtaxialen Richtung zu strömen.

2. Wärmetauscher nach Anspruch 1, **dadurch gekennzeichnet, dass** die zweite Fluidströmungsführung und die erste Fluidströmungsführung konfiguriert sind, sodass das zweite Fluid, das durch die Vielzahl von Wärmetauschrohren strömt, und das erste Fluid, das durch die ersten Fluidräume strömt, in entgegengesetzten Richtungen strömen.

3. Wärmetauscher nach Anspruch 1, **dadurch gekennzeichnet, dass** die erste nichtaxiale Fluidströmungsführungsstruktur eine spiralförmige Struktur ist.

4. Wärmetauscher nach Anspruch 1, **dadurch gekennzeichnet, dass** die Zentren der Wärmetauschrohre mit Streifenleitblechen bereitgestellt sind.

5. Wärmetauscher nach Anspruch 4, **dadurch gekennzeichnet, dass** ein Ende der Wärmetauschrohre geschlossen ist, die Streifenleitbleche hohle Streifenleitbleche mit darin gebildeten Rohrleitungen sind und angeordnet sind, um das zweite Fluid von den Wärmetauschrohren in die Strömungssammelkammer (134, 234, 434) umzuleiten.

6. Energierückgewinnungsvorrichtung, umfassend:
den Wärmetauscher nach einem der Ansprüche 1 bis 5; und
ein externes Mittel, um die Temperatur des zweiten Fluids, das von dem zweiten Fluidauslass des Wärmetauschers abgelassen wird, nachdem der Wärmetausch durch das externe Mittel verändert worden ist, in eine entsprechende Gebrauchstemperatur zu bringen und um zu bewirken, dass das zweite Fluid als das erste Fluid dient, das in die Öffnung der ersten Fluidströmungsführung des Wärmetauschers nach Gebrauch eingetreten ist.

7. Energierückgewinnungsvorrichtung nach Anspruch 6, **dadurch gekennzeichnet, dass** das externe Mittel einen Heizer oder Kühler zum Erwärmen oder Abkühlen des zweiten Fluids, das von dem zweiten Fluidauslass nach dem Wärmetausch abgelassen wurde, umfasst, wobei die Temperatur des ersten Fluids, das in die Öffnung der ersten Fluidströmungsführung nach Gebrauch eingetreten ist, höher oder niedriger liegt, als diejenige des zweiten Fluids, das in den zweiten Fluideinlass eingetreten ist.

8. Energierückgewinnungsvorrichtung nach Anspruch 6, **dadurch gekennzeichnet, dass** das externe Mittel einen Mischer umfasst, der das zweite Fluid, das aus dem zweiten Fluidauslass abgelassen wurde, mit einem externen vorgewärmten oder vorgekühlten dritten Fluid mischt, um die Temperatur zu erhöhen oder zu reduzieren, wobei die Temperatur des ersten Fluids, das in die Öffnung der ersten Fluidströmungsführung nach Gebrauch eingetreten ist, höher oder niedriger liegt, als diejenige des zweiten Fluids, das in den zweiten Fluideinlass eingetreten ist.

9. Energierückgewinnungssystem, umfassend:
die Energierückgewinnungsvorrichtung nach Anspruch 7;
eine zweite Fluidquelle, wobei der zweite Fluideinlass des Wärmetauschers direkt oder indirekt mit der zweiten Fluidquelle verbunden ist, um das zweite Fluid für den zweiten Fluideinlass bereitzustellen; und
eine Fluidablassrohrleitung, wobei der erste Fluidauslass der ersten Fluidströmungsführung des Wärmetauschers direkt oder indirekt mit der Fluidablassrohrleitung verbunden ist,
wobei ein Einlass des Heizers oder Kühlers direkt oder indirekt mit dem zweiten Fluidauslass des Wärmetauschers zum Erwärmen oder Abkühlen des zweiten Fluids, das von dem zweiten Fluidauslass abgelassen wird, verbunden ist, und ein Auslass des Heizers oder Kühlers zum Ablassen des erwärmten oder gekühlten zweiten Fluids verwendet wird,
wobei die Öffnung der ersten Fluidströmungsführung des Wärmetauschers das erste Fluid nach Gebrauch aufnimmt, wobei die Temperatur des ersten Fluids höher oder niedriger ist, als die Temperatur des zweiten Fluids, sodass sich das erste Fluid einem Wärmetausch zusammen mit dem zweiten Fluid, das durch die Vielzahl von Wärmetauschrohren der zweiten Fluidströmungsführung strömt, unterzieht, wobei die Temperatur des zweiten Fluids erhöht oder reduziert wird und das zweite Fluid aus dem zweiten Fluidauslass abgelassen wird, wobei das erste Fluid nach dem Wärmetausch an die Fluidablassrohrleitung über den ersten Fluidauslass abgelassen wird.

10. Energierückgewinnungssystem, umfassend:
die Energierückgewinnungsvorrichtung nach Anspruch 8;
eine zweite Fluidquelle, wobei der zweite Fluideinlass des Wärmetauschers direkt oder indirekt mit der zweiten Fluidquelle verbunden ist, um das zweite Fluid für den zweiten Fluideinlass bereitzustellen;
eine dritte Fluidquelle zum Bereitstellen des vorgewärmten oder vorgekühlten dritten Fluids; und
eine Fluidablassrohrleitung, wobei der erste Fluidauslass der ersten Fluidströmungsführung des Wärmetauschers direkt oder indirekt mit der Fluidablassrohrleitung verbunden ist,
wobei der Mischer einen Fluidtemperatur- und -strömungsregler umfasst, wobei der Einlass des Mischers direkt oder indirekt mit dem zweiten Fluidauslass des Wärmetauschers und der dritten Fluidquelle zum Mischen des zweiten Fluids, das aus dem zweiten Fluidauslass nach dem Wärmetausch abgelassen wurde, und dem vorgewärmten oder vorgekühlten dritten Fluid von der dritten Fluidquelle und das Regeln der Temperatur und Strömung davon zum Gebrauch verbunden ist, und das gemischte Fluid das erste Fluid wird, das in die Öffnung der ersten Fluidströmungsführung eintritt,
wobei die Öffnung der ersten Fluidströmungsführung des Wärmetauschers das erste Fluid nach Gebrauch aufnimmt, wobei die Temperatur des ersten Fluids höher oder niedriger ist, als die Temperatur des zweiten Fluids, sodass sich das erste Fluid einem Wärmetausch zusammen mit dem zweiten Fluid, das durch die Vielzahl von Wärmetauschrohren der zweiten Fluidströmungsführung strömt, unterzieht, und die Temperatur des zweiten Fluids erhöht oder reduziert wird, wobei das zweite Fluid aus dem zweiten Fluidauslass abgelassen wird, wobei das erste Fluid nach dem Wärmetausch über den ersten Fluidauslass an die Fluidablassrohrleitung abgelassen wird.

## Revendications

1. Échangeur de chaleur (1, 2, 4), comprenant :
un premier guide d'écoulement de fluide (11, 21, 41) ayant une ouverture (111, 211, 411), une cavité (113, 212, 441) et une première sortie de fluide (112, 213, 413), dans lequel l'ouverture (111, 211, 411) est utilisée pour l'admission d'un premier fluide, et la première sortie de fluide (112, 213, 413) est destinée à l'évacuation du premier fluide ;
un deuxième guide d'écoulement de fluide (13, 23, 43) ayant une deuxième entrée de fluide (131, 231, 431), une chambre de déviation d'écoulement (132, 232, 432), une pluralité de tubes d'échange de chaleur (133, 233, 433) définissant chacun un trajet d'écoulement de fluide, une chambre de collecte d'écoulement (134, 234, 434) et une deuxième sortie de fluide (135, 235, 435), la deuxième entrée de fluide (131, 231, 431) étant destinée à l'admission d'un deuxième fluide ayant une température différente de celle du premier fluide,
dans lequel la chambre de déviation d'écoulement (132, 232, 432) est agencée pour dévier un deuxième fluide de la deuxième entrée de fluide (131, 231, 431) dans la pluralité de tubes d'échange de chaleur (133, 233, 433), pour la collecte dans la chambre de collecte d'écoulement (134, 234, 434) et l'évacuation subséquente de la deuxième sortie de fluide,
le deuxième guide d'écoulement de fluide (13, 23, 43) étant situé dans la cavité (113, 212, 441) du premier guide d'écoulement de fluide (11, 21, 41) pour former une pluralité de premiers espaces de fluide (141, 251, 437, 438) entourant la pluralité de tubes d'échange de chaleur (133, 233, 433), lesdits premiers espaces de fluide étant reliés à l'ouverture (111, 211, 411) et la première sortie de fluide (112, 213, 413) du premier guide d'écoulement de fluide pour guider le premier fluide autour de la pluralité de tubes d'échange de chaleur (133, 233, 433) de l'ouverture (111, 211, 411) à la première sortie de fluide (112, 213, 413),
dans lequel lors de l'écoulement du deuxième fluide le long de la pluralité de tubes d'échange de chaleur, le deuxième fluide subit un échange de chaleur avec le premier fluide s'écoulant à travers les premiers espaces de fluide de façon à changer la température du deuxième fluide avant que le deuxième fluide soit ensuite évacué de la deuxième sortie de fluide, **caractérisé en ce que**
des parois des premiers espaces de fluide et des parois du trajet d'écoulement de fluide de chaque tube d'échange de chaleur comprennent des structures de guide d'écoulement non axiales pour encourager le premier fluide et le deuxième fluide à s'écouler dans une direction non axiale.

2. Échangeur de chaleur selon la revendication 1, **caractérisé en ce que**, le deuxième guide d'écoulement de fluide et le premier guide d'écoulement de fluide sont configurés de sorte que le deuxième fluide s'écoulant à travers la pluralité de tubes d'échange de chaleur et le premier fluide s'écoulant à travers les premiers espaces de fluide s'écoulent dans des directions opposées.

3. Échangeur de chaleur selon la revendication 1, **caractérisé en ce que**, la structure de guide d'écoulement non axiale de premier fluide est une structure hélicoïdale.

4. Échangeur de chaleur selon la revendication 1, **caractérisé en ce que**, les centres des tubes d'échange de chaleur sont dotés de déflecteurs en bande.

5. Échangeur de chaleur selon la revendication 4, **caractérisé en ce que**, une extrémité des tubes d'échange de chaleur est fermée, les déflecteurs en bande sont des déflecteurs en bande creux avec des conduites formées à l'intérieur et sont agencés pour dévier le deuxième fluide des tubes d'échange de chaleur dans la chambre de collecte d'écoulement (134, 234, 434).

6. Dispositif de récupération d'énergie, comprenant :
l'échangeur de chaleur selon l'une quelconque des revendications 1 à 5 ; et
un moyen externe, pour faire changer la température du deuxième fluide évacué de la deuxième sortie de fluide de l'échangeur de chaleur après l'échange de chaleur à travers le moyen externe à une température d'utilisation appropriée et faire servir le deuxième fluide de premier fluide entré dans l'ouverture du premier guide d'écoulement de fluide de l'échangeur de chaleur après utilisation.

7. Dispositif de récupération d'énergie selon la revendication 6, **caractérisé en ce que**, le moyen externe comprend un dispositif de chauffage ou un refroidisseur pour le chauffage ou le refroidissement du deuxième fluide évacué de la deuxième sortie de fluide après l'échange de chaleur, la température du premier fluide entré dans l'ouverture du premier guide d'écoulement de fluide après utilisation est supérieure à ou inférieure à celle du deuxième fluide entré dans la deuxième entrée de fluide.

8. Dispositif de récupération d'énergie selon la revendication 6, **caractérisé en ce que**, le moyen externe comprend un mélangeur qui mélange le deuxième fluide évacué de la deuxième sortie de fluide avec un troisième fluide préchauffé ou pré-refroidi externe de façon à augmenter ou à diminuer la température, la température du premier fluide entré dans l'ouverture du premier guide d'écoulement de fluide après utilisation est supérieure ou inférieure à celle du deuxième fluide entré dans la deuxième entrée de fluide.

9. Système de récupération d'énergie, comprenant :
le dispositif de récupération d'énergie selon la revendication 7 ;
une deuxième source de fluide, dans lequel la deuxième entrée de fluide de l'échangeur de chaleur est reliée directement ou indirectement à la deuxième source de fluide, pour la fourniture du deuxième fluide à la deuxième entrée de fluide, et
une conduite d'évacuation de fluide, dans lequel la première entrée de fluide du premier guide d'écoulement de fluide de l'échangeur de chaleur est reliée directement ou indirectement à la conduite d'évacuation de fluide,
dans lequel une entrée du dispositif de chauffage ou refroidisseur est reliée directement ou indirectement à la deuxième sortie de fluide de l'échangeur de chaleur, pour chauffer ou refroidir le deuxième fluide évacué de la deuxième sortie de fluide, et une sortie du dispositif de chauffage ou refroidisseur est utilisée pour l'évacuation du deuxième fluide chauffé ou refroidi,
dans lequel l'ouverture du premier guide d'écoulement de fluide de l'échangeur de chaleur reçoit le premier fluide après utilisation, la température dudit premier fluide est supérieure ou inférieure à la température du deuxième fluide de sorte que le premier fluide subit un échange de chaleur avec le deuxième fluide s'écoulant à travers la pluralité de tubes d'échange de chaleur du deuxième guide d'écoulement de fluide, la température du deuxième fluide est augmentée ou diminuée et le deuxième fluide est évacué de la deuxième sortie de fluide, dans lequel le premier fluide après l'échange de chaleur est évacué vers la conduite d'évacuation de fluide via la première sortie de fluide.

10. Système de récupération d'énergie, comprenant :
le dispositif de récupération d'énergie selon la revendication 8 ;
une deuxième source de fluide, dans lequel la deuxième entrée de fluide de l'échangeur de chaleur est reliée directement ou indirectement à la deuxième source de fluide, pour la fourniture du deuxième fluide pour la deuxième entrée de fluide ;
une troisième source de fluide, pour la fourniture du troisième fluide préchauffé ou pré-refroidi ; et
une conduite d'évacuation de fluide, dans lequel la première sortie de fluide du premier guide d'écoulement de fluide de l'échangeur de chaleur est reliée directement ou indirectement à la conduite d'évacuation de fluide,
dans lequel le mélangeur comprend un régulateur de température et de débit de fluide, dans lequel l'entrée dudit mélangeur est reliée directement ou indirectement à la deuxième sortie de fluide de l'échangeur de chaleur et la troisième source de fluide pour le mélange du deuxième fluide évacué de la deuxième sortie de fluide après l'échange de chaleur et le troisième fluide préchauffé ou pré-refroidi de la troisième source de fluide et la régulation de température et de débit de celui-ci à utiliser, et le fluide mélangé devient le premier fluide à entrer dans l'ouverture du premier guide d'écoulement de fluide,
dans lequel l'ouverture du premier guide d'écoulement de fluide de l'échangeur de chaleur prend le premier fluide après utilisation dans lequel la température dudit premier fluide est supérieure à ou inférieure à la température du deuxième fluide, de sorte que le premier fluide subit un échange de chaleur avec le deuxième fluide s'écoulant à travers la pluralité de tubes d'échange de chaleur du deuxième guide d'écoulement de fluide, et la température du deuxième fluide est augmentée ou diminuée, le deuxième fluide est évacué de la deuxième sortie de fluide, dans lequel le premier fluide est évacué vers la conduite d'évacuation de fluide via la première sortie de fluide après l'échange de chaleur.
